Europäisches Patentamt

European Patent Office

Office européen des brevets

(11) Veröffentlichungsnummer: **0 489 091 B1**

(12) **EUROPÄISCHE PATENTSCHRIFT**

(45) Veröffentlichungstag der Patentschrift: **04.05.94**

(51) Int. Cl.5: **G06K 19/06**, G07F 7/08, G07F 7/10

(21) Anmeldenummer: **90913138.5**

(22) Anmeldetag: **22.08.90**

(86) Internationale Anmeldenummer:
**PCT/EP90/01391**

(87) Internationale Veröffentlichungsnummer:
**WO 91/03028 (07.03.91 91/06)**

(54) **VERFAHREN ZUR KODIERUNG UND VERFÜGBARKEIT EINER CHIPKARTE.**

(30) Priorität: **25.08.89 DE 3928107**

(43) Veröffentlichungstag der Anmeldung:
**10.06.92 Patentblatt 92/24**

(45) Bekanntmachung des Hinweises auf die
Patenterteilung:
**04.05.94 Patentblatt 94/18**

(84) Benannte Vertragsstaaten:
**AT CH DE ES FR GB IT LI SE**

(56) Entgegenhaltungen:
**EP-A- 0 203 543**
**WO-A-86/04170**
**FR-A- 2 503 423**
**US-A- 4 808 802**

(73) Patentinhaber: **Klöckner-Moeller Elektrizitäts GmbH**
**Hein-Moeller-Strasse 7-11**
**D-53115 Bonn(DE)**

(72) Erfinder: **WRATIL, Peter**
**Drosselweg 38**
**D-5060 Berg. Gladbach(DE)**

## Beschreibung

Die Erfindung bezieht sich auf ein Verfahren zum Betreiben von aus chipkartengesteuerten Steuerungssystemen bestehende Anlagen, deren Verfügbarkeit durch das Verfahren auf das berechtigte Steuerungssystem limitiert wird, wobei eine Chipkarte, die als Speichermedium in einem Steuerungssystem vorgesehen ist, in eine Aufnahmeeinrichtung kontaktiert und entsprechend ihrer spezifischen Kodierung über einen Datenbus mit dem Steuerungssystem Daten austauscht.

Sicherheitsverfahren und die dazu entsprechenden Einrichtungen für Chipkarten sind in den verschiedensten Varianten bekannt. Ausführlich wird der Stand der Technik in dem Fachbuch von Karlheinz Fietta " Chipkarten: Technik, Sicherheit und Anwendungen " : Hüthig-Verlag, 1989 auf den Seiten 112 bis 137 behandelt. Es werden die heute bekannten Verfahren zum Schutz gegen unerlaubtes Lesen, Schreiben und Löschen sowie gegen Duplikation und Simulation beschrieben.
Eine Limitierung der Verfügbarkeit einer Chipkarte wird in der US-A-4 808 802 (KANO) beschrieben. Die Limitierung bezieht sich nur auf den berechtigten Karteninhaber.
Aus der WO 86/ 04170 ist die Einspeicherung eines Ablaufdatums in den Speicher einer Chipkarte als Teil des Personalisierungsverfahren bekannt geworden.
Die Codierungsmöglichkeiten der zuletzt genannten Verfahren zielen auf Personenidentifizierung.
Diese bekannten Verfahren dienen nicht zur Lösung der Problemstellung, die zu der Erfindung geführt hat. Ausgehend von dem Gedanken, die Chipkarte als Speichermedium für speicherprogrammierbare Steuerungen einzusetzen, ist es für den Hersteller der Chipkarten und Steuerungssysteme von verständlicher Bedeutung, die Komponenten derart zu sichern, daß für ihn kein wirtschaftlicher Nachteilentstehen kann.
Es ist ein besonderer Vorteil, daß eine Chipkarte als Standardkarte vom Hersteller bezogen wird, auf der sich die gesamte Software befindet, die zum Betreiben eines speicherprogrammierbaren Steuerungssystems notwendig ist. Lediglich der Anwenderspeicher ist freiprogrammierbar. Um eine mit einem Anwenderprogramm programmierte Chipkarte nicht in jedem System benutzen zu können , ist es nach dem erfindungsgemäßen Verfahren von besonderen Vorteil, daß die Standardkarte beim Erstbetrieb mit einem Steuerungssystem durch dasselbe System kodiert wird. Damit ist diese Chipkarte für nur ein Steuerungssystem spezifiziert und zum funktionellen Betrieb zugelassen.

Dazu ist es zweckmäßig, daß die Chipkarte erst nach dem Kodiervorgang kopierbar wird, wobei der Kopiervorgang nur auf dem Steuerungssystem möglich ist, auf dem die Mutterkarte, also die erste Chipkarte kodiert wurde. Eine Standardkarte kann nicht dupliziert werden. Die kopierten Chipkarten können auch nur mit demselben Steuerungssystem betrieben werden.

Zur Verfügbarkeit seiner Gesamtanlage, ist es für den Anwender zweckmäßig, daß bei einem Hardwaredefekt des Steuerungssystems ein zweites Steuerungssystem mit der kodierten Chipkarte für einen bestimmbaren Verfügbarkeitszeitraum limitierbar ist. Die Funktion seiner Anlage kann also durch Wechseln der Systemhardware und Nutzung der kodierten Karte aufrecht erhalten bleiben. Ist der Verfügbarkeitszeitraum abgelaufen, wird ein weiterer funktioneller Betrieb nur mit dem System möglich, dessen Steuerunugsnummer mit der auf der Chipkarte identisch ist.

Der Erfindung liegt die Aufgabe zugrunde, ein Verfahren zum Betreiben von chipkartengesteuerten Steuerungssystemen anzugeben, wobei eine als Datenträger eines Steuerungssystem vorgesehene Chipkarte mit einem Steuerungssystem derart kodiert werden soll, daß ein funktioneller Betrieb nur mit dem Steuerungssystem durchführbar ist, mit der die Chipkarte kodiert wurde. Dabei soll eine einmal kodierte Chipkarte beliebig oft kopierbar sein und bei Verlust der Chipkarte oder defekter Systemhardware für ein limitierten Zeitraum einem weiteren Steuerungssystem zur Verfügung stehen.

Diese Aufgabe wird erfindungsgemäß dadurch gelöst, daß beim Erstbetrieb eines Steuerungssystems mit einer Chipkarte ein Kodiervorgang erfolgt, der die Chipkarte auf dasselbe Steuerungssystem spezifiziert, indem Steuerungssystem und Chipkarte jeweils einen Lieferantencode und aufweisen, die bei einem ersten funktionellen Betrieb der Chipkarte mit dem Steuerungssystem auf Identität verglichen werden und daß bei identischen Lieferantencodes eine systemspezifische Steuerungsnummer auf die Chipkarte übertragen wird und daß die Chipkarte nur kopierbar ist, wenn sie eine Steuerungsnummer aufweist. Der Kopiervorgang einer Chipkarte mit der Mutterkarte ist nur mit dem Steuerungssystem durchführbar, mit dem die Mutterkarte kodiert wurde, wobei die Kodierung der Chipkarte auf das Steuerungssystem derart erfolgt, daß bei identischen Lieferantencodes die vom Codespeicher über den Informationsbus dem Organisationsspeicher angebotene Steuerungsnummer mittels der Abgleichleitung in einen zweiten Speicherbereich des Organisationsspeichers eingeschrieben wird und nicht mehr veränderbar ist, wodurch eine kopierte Chipkarte nur mit dem Steuerungssystem betreibbar ist, mit dem die Mutterkarte kodiert wurde. Ein zeitlich limitierbarer funktioneller Betrieb einer kodierten Chipkarte mit einem zweiten Steuerungssystem, dessen Steuerungsnummer nicht mit der Steuerungsnummer der Chipkarte übereinstimmt erfolgt derart, indem das aktuelle Datum aus der Echtzeiteinrichtung des zweiten Steuerungssystems in einen dritten Speicherbereich des Organisationsspeichers eingeschrieben wird und zu dem aktuellen Datum ein Zeitbereich hinzuaddiert wird, der den Verfügbarkeitszeitraum der Chipkarte mit dem zweiten Steuerungssystem bestimmt, wobei die Lieferantencodes, die Steuerungsnummer, das aktuelle Datum und der Verfügbarkeitszeitraum mittels eines Informationsbusses und einer Kommunikationseinrichtung zwischen Chipkarte und Steuerungssystem transportiert werden.

Die Unteransprüche 2 bis 8 beinhalten die vorteilhaften Ausgestaltungen des erfindungsgemäßen Verfahrens und Einrichtungen zur Durchführung des Verfahrens.

Die Erfindung wird in der Beschreibung an einem Ausführungsbeispiel anhand der Zeichnung erläutert. In der Zeichnung zeigt

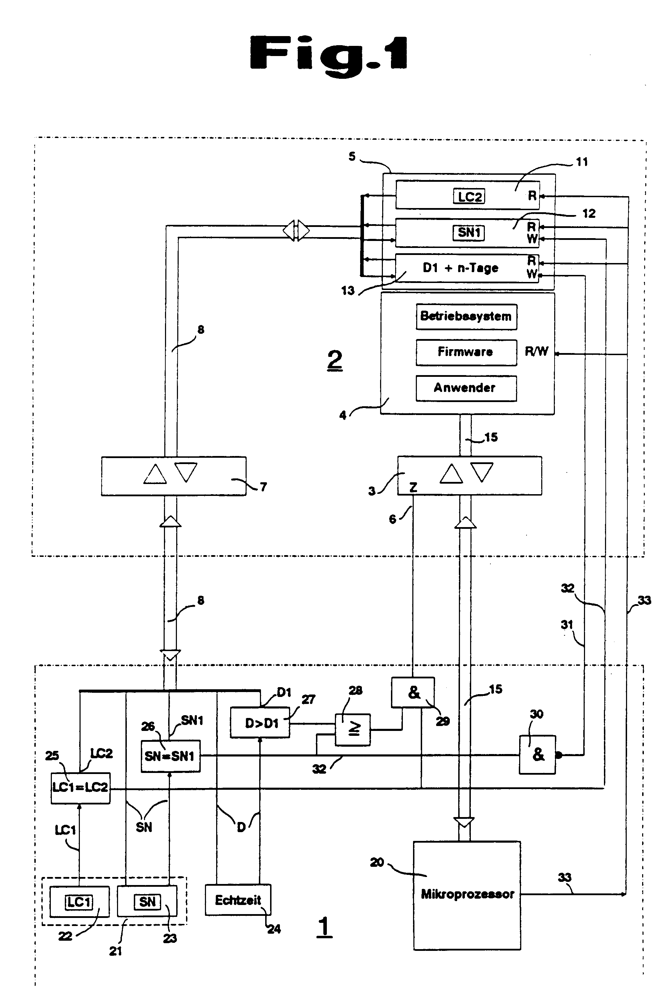

Fig.1 eine schematische Schaltungsanordnung, zur Durchführung des erfindungsgemäßen Verfahrens.

Die Fig.1 zeigt eine schematische Schaltungsanordnung, zur Durchführung des erfindungsgemäßen Verfahrens. Auf der Chipkarte **2** befindet sich ein Programmspeicher **4**, ein Organisationsspeicher **5**, der Informationsbustreiber **7** und der Datenbustreiber **3**. Der Programmspeicher **4** weist zwei festprogrammierte und vom Anwender nicht zu beeinflussende Speicherbereiche auf. Ein Speicherbereich ist für das Betriebssystem vorgesehen während der zweite Speicherbereich die Firmware beinhaltet. Ein dritter Speicherbereich des Programmspeichers **4** ist für die Anwendersoftware vorgesehen und freiprogrammierbar. Der Programmspeicher kommuniziert mit dem Steuerungssystem **1** über den Datenbus **15**, der von dem Treiber **3** bidirektional getrieben wird.

Der Organisationsspeicher **5** weist ebenfalls verschiedene Speicherbereiche auf. In dem Speicherbereich **11** befindet sich festprogrammiert und nicht mehr veränderbar der Lieferantencode **LC2**. Der zweite Speicherbereich **12** ist für die Aufnahme der Steuerungsnummer **SN1** vorgesehen, welche bei dem ersten funktionellen Betrieb mit einem Steuerungssystem während der Initialisierungsphase in diesen Speicherbereich **12** eingeschrieben wird und dann auch nicht mehr überschreibbar ist. Der dritte Speicherbereich **13** wird für den Normalbetrieb nicht benötigt. Der Organisationsspeicher **5** kommuniziert mit dem Steuerungssystem über den Informationsbus **8**, der von dem Treiber **7** bidirektional getrieben wird.

Die Kommunikationseinrichtung **1** ist integraler Bestandteil des Steuerungssystems und weist eine Einschubvorrichtung zur Aufnahme der Chipkarte **2** auf. Die Chipkarte **2** kontaktiert über eine geeignete Steckvorrichtung, die den Datenbus **15** und Informationsbus **8** mit der Kommunikationseinrichtung **1** des Steuerungssystems elektrisch verbindet.

Beim Erstbetrieb steckt der Anwender die Chipkarte **2** in die Einschubvorrichtung des Steuerungssystems wobei die Chipkarte **2** elektrisch mit der Kommunikationseinrichtung **1** des Steuerungssystems kontaktiert. Der Mikroprozessor **20** gibt dann den Steuerbefehl zum Auslesen des Lieferantencodes **LC2** an die Chipkarte **2** über die Steuerleitung **33**. Der Lieferantencode **LC2** erreicht über den Informationsbus **8** und den Bustreiber **7** den LC-Vergleicher **25**. Dieser vergleicht den Lieferantencode **LC2** der Chipkarte **2** mit dem Lieferantencode **LC1** des Steuerungssystems, der dem Codespeicher **21** aus seinem Speicherbereich **22** entnommen wird und dem Vergleicher **25** ständig zur Verfügung steht. Der Codepeicher **21** bietet dem Organisationsspeicher **5** die Steuerungsnummer **SN** über den Informationsbus **8** an, und schreibt diese bei Übereinstimmung der Lieferantencodes **LC1=LC2** mittels der Steuerleitung **32** in den Speicherbereich **11** des Organisati-onsspeichers **5** der Chipkarte **2** ein. Der Speicherbereich **11** des Organisationsspeicher **5** ist ab diesem Zeitpunkt fest programmiert und beinhaltet die nicht mehr veränderbare Steuerungsnummer **SN1**. Die Chipkarte **2** ist nun auf das Steuerungssystem **1** kodiert und kann mit keinem anderen Steuerungssystem ohne zeitliche Limitierung funktionell betrieben werden.

Beim erneuten Einstecken der Chipkarte **2** in die Einschubvorrichtung des Steuerungssystems findet ein Identifikationszyklus statt, den der Mikroprozessor **20** mit seinem Steuerbefehl **33** zum Lesen des Lieferantencodes **LC2** eröffnet. Die Lieferantencodes **LC1** und **LC2** werden mittels des LC-Vergleichers **25** auf Übereinstimmung verglichen. Bei deren Übereinstimmung erfolgt der Vergleich der Steuerungsnummern **SN** und **SN1** mittels des SN-Vergleichers **26**. Erst bei Übereinstimmung dieser beiden Codes erfolgt über die logischen Verknüpfungsmittel die Freigabe des Datenbustreibers über seinen Freigabeeingang **6**. Bei **LC = LC1** wird der Treiber **3** und somit der Datenbus **15** direkt über das UND-Gatter **29** gesperrt und eine Kommunikation zwischen Steuerungssystem und Chipkarte verhindert.

Ein besonderer Vorteil liegt in der zeitlichen Limitierung des funktionellen Betriebes einer kodierten Chipkarte mit einem zweiten Steuerungssystem dessen Steuerungsnummer **SN** nicht mit der Steuerungsnummer **SN1** der Chipkarte **2** übereinstimmt. Dieses Verfahren dient in erster Linie der höheren Verfügbarkeit einer Steuerungsanlage. Fällt das Steuerungssystem **1** durch Hardwaredefekt aus, ist der Anwender in der Lage, ein zweites Steuerungssystem einzusetzen. Bei diesem Steuerungssystem muß lediglich der Lieferantencode **LC** mit dem Lieferantencode **LC1** der Chipkarte übereinstimmen. Beim Vergleich der Steuerungsnummern, wärend des Identifikationszyklusses, stellt der Vergleicher **26** fest, daß die Wertigkeit von **SN = SN1** ist. Das Abgleichsignal des Vergleichers **26** wird von dem Inverter **30** negiert und gibt einen Befehl über die Steuerleitung **31** und den Organisationsspeicher **5** zum Einschreiben des aktuellen Datums in seinen dritten Speicherbereich **13**. Das Datum **D** wird dem Organisationsspeicher **5** über den Informationsbus **8** aus der Echtzeiteinrichtung **24** des Steuerungssystems angeboten. Zu diesem Datum wird nun ein fest vorgegebener Zeitraum, beispielsweise 30 Tage, hinzuaddiert. Das Ergebnis **D + n-Tage** steht dem Datumsvergleicher **27** über dem Informationsbus **8** zur Verfügung und wird als Wert **D1** ständig mit dem aktuellen Datum **D** verglichen. Erst nach Ablauf der als Beispiel angenommenen 30 Tage, erkennt der Vergleicher **27 D>D1** und sperrt über das UND-Gatter **29** den Datenbustreiber **3**. Ein erneutes Beschreiben des Speicherbereichs **13** mit einem weiteren Datum ist nicht mehr möglich. Die Chipkarte ist dann nur noch in dem Steuerungssystem verfügbar, mit dem sie kodiert wurde. Ein nochmaliger zeitlich limitierter Betrieb mit einem weiteren Steuerungssystem ist nicht erreichbar.

## Patentansprüche

1. Verfahren zum Betreiben von aus chipkartengesteuerten Steuerungssystemen bestehende Anlagen, deren Verfügbarkeit durch das Verfahren auf das berechtigte Steuerungssystem limitiert wird, wobei eine Chipkarte, die als Speichermedium in einem Steuerungssystem vorgesehen ist, in eine Aufnahmeeinrichtung kontaktiert und entsprechend ihrer Kodierung über einen Datenbus mit dem Steuerungssystem Daten austauscht, **dadurch gekennzeichnet**, daß

    - beim Erstbetrieb eines Steuerungssystems mit einer Chipkarte ein Kodiervorgang erfolgt, der die Chipkarte auf dasselbe Steuerungssystem spezifiziert, indem Steuerungssystem und Chipkarte (**2**) jeweils einen Lieferantencode (**LC1**) und (**LC2**) aufweisen, die bei einem ersten funktionellen Betrieb der Chipkarte (**2**) mit dem Steuerungssystem auf Identität verglichen werden und daß bei identischen Lieferantencodes (**LC1=LC2**) eine systemspezifische Steuerungsnummer (**SN**) auf die Chipkarte (**2**) übertragen wird und daß die Chipkarte nur kopierbar ist, wenn sie eine Steuerungsnummer aufweist;

    - der Kopiervorgang einer Chipkarte mit der Mutterkarte nur mit dem Steuerungssystem durchführbar ist, mit dem die Mutterkarte kodiert wurde, wobei die Kodierung der Chipkarte (**2**) auf das Steuerungssystem derart erfolgt, daß bei identischen Lieferantencodes (**LC1=LC2**) die von einem Codespeicher (**21**) des Steuerungssystems über den Informationsbus (**8**) einem Organisationsspeicher (**5**) der Chipkarte angebotene Steuerungsnummer (**SN**) mittels der Abgleichleitung (**32**) in einen zweiten Speicherbereich (**12**) des Organisationsspeichers (**5**) eingeschrieben wird und nicht mehr veränderbar ist, wodurch eine kopierte Chipkarte nur mit dem Steuerungssystem betreibbar ist, mit dem die Mutterkarte kodiert wurde;

    - ein zeitlich limitierbarer funktioneller Betrieb einer kodierten Chipkarte mit einem zweiten Steuerungssystem, dessen Steuerungsnummer (**SN**) nicht mit der Steuerungsnummer (**SN1**) der Chipkarte übereinstimmt, derart erfolgt, indem das aktuelle Datum aus der Echtzeiteinrichtung (**24**) des zweiten Steuerungssystems in einen dritten Speicherbereich (**13**) des Organisationsspeichers (**5**) eingeschrieben wird und zu dem aktuellen Datum ein Zeitbereich (**n-Tage**) hinzuaddiert wird, der den Verfügbarkeitszeitraum (**D1**) der Chipkarte (**2**) mit dem zweiten Steuerungssystem bestimmt, wobei die Lieferantencodes (**LC1, LC2**), die Steuerungsnummer (**SN, SN1**), das aktuelle Datum (**D**) und der Verfügbarkeitszeitraum (**D1**) mittels eines Informationsbusses (**8**) und einer Kommunikationseinrichtung (**1**) zwischen Chipkarte (**2**) und Steuerungssystem transportiert werden.

2. Verfahren nach Anspruch 1, **dadurch gekennzeichnet**, daß der Datumvergleicher (**27**) das aktuelle Datum (**D**) ständig mit dem Verfügbarkeitszeitraum (**D1**) vergleicht und bei Abgleich (**D>D1**) den Datenbustreiber (**3**) sperrt.

3. Verfahren nach den Ansprüchen 1 und 2, **dadurch gekennzeichnet,** daß bei der ersten und jeder weiteren Kopplung der Chipkarte (**2**) mit dem Steuerungssystem eine Anfangsinitialisierung abläuft, wobei der Lieferantencode (**LC1**) des Steuerungssystems mit dem Lieferantencode (**LC2**) der Chipkarte verglichen wird, indem der LC-Vergleicher (**25**) in der Kommunikationseinrichtung (**1**) die Wertigkeit der Lieferantencodes (**LC1**) und (**LC2**) auf Identität vergleicht und bei Nichtübereinstimmung den Datenbustreiber (**3**) sperrt.

4. Verfahren nach Anspruch 1 bis 3, **dadurch gekennzeichnet**, daß die Chipkarte (2) einen Organisationsspeicher (**5**) aufweist, der über den Informationsbus (**8**) mit der Kommunikationseinrichtung (1) des Steuerungssystems verbunden ist.

5. Verfahren nach den Ansprüchen 1 bis 4, **dadurch gekennzeichnet**, daß der Organisationsspeicher in einem ersten Speicherbereich (**11**) den festprogrammierten und nicht veränderbaren Lieferantencode (**LC1**) enthält.

6. Verfahren nach den Ansprüchen 1 bis 5, **dadurch gekennzeichnet,** daß der Organisationsspeicher (**5**) über einen zweiten Speicherbereich (**12**) verfügt, der für die Aufnahme der Steuerungsnummer (**SN**) vorgesehen ist und der einmal mit der Steuerungsnummer (**SN1**) programmiert, nicht mehr veränderbar ist.

7. Verfahren nach den Ansprüchen 1 bis 6, **dadurch gekennzeichnet**, daß der Organisationsspeicher (**5**) einen dritten Speicherbereich (**13**) aufweist, der für die Aufnahme des aktuellen Datums (**D**) der Echtzeiteinrichtung (**24**) des Steuerungssystems vorgesehen ist und der einmal mit einem Datum (**D1**) programmiert, nicht mehr veränderbar ist.

8. Verfahren nach den Ansprüchen 1 bis 7, **dadurch gekennzeichnet**, daß die Kommunikationseinrichtung (1) einen Codespeicher (**21**) aufweist, dessen erster Speicherbereich (**22**) einen festprogrammierten und nicht veränderbaren Lieferantencode (**LC**) und in seinem zweiten Speicherbereich (**23**) eine festprogrammierte und nicht veränderbare Steuerungsnummer (**SN**) enthält.

**Claims**

1. A procedure for the operation of installations consisting of control systems controlled by smart cards, the availability of which is limited to the authorized control system by the procedure, while a smart card, which is implemented as a storage medium within a control system, enters into contact with a receiving device and exchanges data with the control system via a data bus and in accordance with its codification, **wherein**

   - the first operation of a control system by means of a smart card includes a codification process which specifies the smart card according to the same control system in such a way that control system and smart card (2) present a supplier code (LC1) and (LC2) respectively, which are compared for identity during a first functional operation of the smart card (2) with the control system, and wherein a system-specific control number (SN) is transferred to the smart card (2) in case of identical supplier codes (LC1 = LC2), and wherein the smart card can only be copied when it has a control number,

   - the copy procedure of a smart card by the master card can only be carried out by the control system which has been used to encode the master card, while the codification of smart card (2) according to the control system is done in such a way that the control number (SN), which is proposed by a code memory (21) of the control system to an organization memory (5) of the smart card via information bus (8), is written into a second storage area (12) of organization memory (5) by means of a collating line (32) in case of identical supplier codes (LC1 = LC2), and cannot be changed any longer thus enabling a copied smart card to be operated only with the control system which has been used to encode the master card,

   - a functional operation limitable in time of a coded smart card on a second control system, which has a control number (SN) that does not correspond to the control number (SN1) of the smart card, is done in such a way that the topical date from the real-time device (24) of the second control system is written into a third storage area (13) of organization memory (5) and that a time interval of (n days), which determines the period of availability (D1) of smart card (2) on the second control system, is added to the topical date while supplier codes (LC1, LC2), control numbers (SN, SN1), topical date (D) and period of availability (D1) are transferred between smart card (2) and control system by means of an information bus (8) and a communication device (1).

2. Procedure as claimed in claim 1 wherein date comparator device (27) continuously compares topical date (D) with period of availability (D1) and blocks data bus driver (3) when the the result of comparison is (D>D1).

3. Procedure as claimed in claims 1 and 2 wherein an initial initialization is done during the first and during any additional coupling of smart card (2) with the control system, in which the supplier code (LC1) of the control system is compared with the supplier code (LC2) of the smart card in such a way that supplier-code comparator (25) in communication device (1) checks the significance of supplier code (LC1) with (LC2) for identity and blocks data bus driver (3) in case of non-identity.

4. Procedure as claimed in claims 1 through 3 wherein smart card (2) has an organization memory (5) which is connected to communication device (1) of the control system via information bus (8).

5. Procedure as claimed in claims 1 through 4 wherein the organization memory contains the fixedly programmed and unalterable supplier code (LC1) in a first storage area (11).

6. Procedure as claimed in claims 1 through 5 wherein the organization memory (5) has a second storage area (12) which enables the recording of control number (SN) and which cannot be changed once it has been programmed with control number (SN1).

7. Procedure as claimed in claims 1 through 6 wherein the organization memory (5) has a third storage area (13) which enables the recording of the topical date (D) of real-time device (24) of the control system and which is unalterable once it has been programmed with a date (D1).

8. Procedure as claimed in claims 1 through 7 wherein the communication device (1) has a code memory (21), in which the first memory area (22) contains a fixedly programmed and unalterable supplier code (LC) and in which its second storage area (23) contains a fixedly programmed and unalterable control number (SN).

**Revendications**

1. Procédé permettant l'exploitation d'installations constituées de systèmes de commande à cartes à mémoire, installations dont le procédé limite la disponibilité au système de commande autorisé, une carte à mémoire, qui est organisée comme un élément de stockage dans un système de commande, entrant en contact avec un dispositif de réception et échangeant des données avec le système de commande selon son codage et par l'intermédiaire d'un bus de données, **caractérisé en ce que**

- un procédé d'encodage se déroule lors de la première mise en service d'un système de commande par une carte à mémoire, procédé qui identifie la carte à mémoire avec le même système de commande par le fait que système de commande et carte à mémoire (2) comportent respectivement un code de fournisseur (LC1) et (LC2) dont l'identité est comparée lors d'une première exploitation fonctionnelle de la carte à mémoire (2) avec le système de commande et en ce qu'un numéro de commande (SN) spécifique au système est transféré à la carte à mémoire (2) en cas de codes de fournisseurs identiques (LC1 = LC2) et en ce que la carte à mémoire peut seulement être copiée si elle comporte un numéro de commande, et en ce que

- le procédé de copie d'une carte à mémoire à partir de la carte maîtresse ne peut être effectué qu'avec le système de commande grâce auquel la carte maîtresse a été encodée, l'encodage de la carte à mémoire (2) par rapport au système de commande étant réalisé de sorte que le numéro de commande (SN) donné à une mémoire opérationnelle (5) de la carte à mémoire par une mémoire de code (21) du système de commande et par l'intermédiaire du bus d'information (8) est inscrit à une deuxième zone de mémoire (12) de la mémoire opérationnelle (5) au moyen de la ligne de validation (32) en cas de codes de fournisseurs identiques (LC1 = LC2) et que ce numéro de commande n'est plus changeable, ce qui ne permet l'utilisation d'une carte à mémoire qu'avec le système de commande grâce auquel la carte maîtresse a été encodée, et que

- une utilisation pendant un temps susceptible d'être limité d'une carte à mémoire encodée sur un deuxième système de commande dont le numéro de commande (SN) ne correspond pas au numéro de commande (SN1) de la carte à mémoire se fait de sorte que la date actuelle obtenue grâce au dispositif en temps réel (24) du deuxième système de commande est inscrite dans une troisième zone de mémoire (13) de la mémoire opérationnelle (5) et qu'une période de temps de (N jours) qui détermine la période de disponibilité (D1) de la carte à mémoire (2) est additionnée à la date actuelle, les codes de fournisseurs (LC1, LC2), les numéros de commande (SN, SN1), la date actuelle (D) et la période de disponibilité (D1) étant transférés entre carte à mémoire (2) et système de commande par l'intermédiaire d'un bus d'information (8) et grâce à un dispositif de communication (1).

2. Procédé selon la revendication 1, caractérisé en ce que le comparateur de date (27) compare continuellement la date actuelle (D) avec la période de disponibilité (D1) et bloque le coupleur de bus (3) en cas de rapport (D>D1).

3. Procédé selon les revendications 1 et 2, caractérisé en ce qu'une initialisation initiale se déroule lors du premier couplage et lors de tout couplage ultérieur de la carte à mémoire (2) avec le système de commande, le code de fournisseur (LC1) du système de commande étant comparé avec le code de fournisseur (LC2) de la carte à mémoire par le fait que le comparateur (25) des codes de fournisseurs à l'intérieur du dispositif de communication (1) compare l'identité de la valeur des codes de fournisseurs (LC1) et (LC2) et bloque le coupleur (3) du bus de données en cas de non-identité.

4. Procédé selon les revendications 1 à 3, caractérisé en ce que la carte à mémoire (2) comprend une mémoire opérationnelle (5) qui est reliée au dispositif de communication (1) du système de commande par l'intermédiaire du bus d'information (8).

5. Procédé selon les revendications 1 à 4, caractérisé en ce qu'une première zone de mémoire (11) de la mémoire opérationnelle contient le code de fournisseur (LC1) programmé de façon fixe et non changeable.

6. Procédé selon les revendications 1 à 5, caractérisé en ce que la mémoire opérationnelle (5) dispose d'une deuxième zone de mémoire (12) qui est prévue pour l'enregistrement du numéro de commande (SN), et qui, une fois programmée avec le numéro de commande (SN1), n'est plus changeable.

7. Procédé selon les revendications 1 à 6, caractérisé en ce que la mémoire opérationnelle (5) comporte une troisième zone de mémoire (13) qui est prévue pour l'enregistrement de la date actuelle (D) obtenue grâce au dispositif en temps réel (24) du deuxième système de commande, et qui, une fois programmée avec une date (D1), n'est plus changeable.

8. Procédé selon les revendications 1 à 7, caractérisé en ce que le dispositif de communication (1) comporte une mémoire de code (21), dont la première zone de mémoire (22) contient un code de fournisseur (LC) programmé de façon fixe et non changeable et dont la deuxième zone de mémoire (23) contient un numéro de commande (SN) programmé de façon fixe et non changeable.

# Fig.1